# EUROPÄISCHE PATENTSCHRIFT

(11) **EP 2 732 100 B1**
(45) Veröffentlichungstag und Bekanntmachung des Hinweises auf die Patenterteilung: **29.07.2015**
(21) Anmeldenummer: 11740555.5
(22) Anmeldetag: 15.07.2011
(51) Int. Cl.: E01C 19/28, G01V 1/153, E02D 3/074

(54) **UNWUCHTERREGER FÜR EIN BODENVERDICHTUNGSGERÄT**
UNBALANCE EXCITER FOR A GROUND COMPACTION DEVICE
EXCITATEUR À BALOURD POUR COMPACTEUR DE SOL

(43) Veröffentlichungstag der Anmeldung: 21.05.2014
(73) Patentinhaber: Ammann Schweiz AG, 4900 Langenthal (CH)
(72) Erfinder: SCHÄRER, Martin, CH-3360 Herzogenbuchsee (CH); ANLIKER, Christoph, CH-4900 Langenthal (CH)
(74) Vertreter: Münch, Martin Walter
(86) Internationale Anmeldenummer: PCT/CH2011/000166
(87) Internationale Veröffentlichungsnummer: WO 2013/010277

(56) Entgegenhaltungen:
- WO-A1-02/42011
- DE-A1-102008 008 802
- DE-U1-202006 004 707

## Beschreibung

### TECHNISCHES GEBIET

Die Erfindung betrifft einen Unwuchterreger für ein Bodenverdichtungsgerät, eine Walzenanordnung mit dem Unwuchterreger sowie eine Vibrationswalze mit der Walzenanordnung gemäss den Oberbegriffen der unabhängigen Patentansprüche.

### STAND DER TECHNIK

Unwuchterreger dienen der Erzeugung zeitveränderlicher Erregerkräfte, mit denen sich an den Erreger angekoppelte Bauteile in Schwingungen versetzen lassen. Sie kommen in vielen Bereichen der Technik zum Einsatz, z.B. in Vibrationsförderern, in Schwingsiebmaschinen, in Verdichtungsgeräten wie z.B. Rüttelplatten und Vibrationswalzen, in Vibrationsrammen und in vibrationserregten Bohr- und Fräsgeräten.

Zur Erzeugung der Erregerkräfte werden, je nach Konstruktionsprinzip, eine oder mehrere Wellen, an denen Unwuchtgewichte angeordnet sind, in Rotation versetzten (siehe z.B. Dokument DE-U1-20 2006 004).

Bei Vibrationswalzen ist es bevorzugt, die Unwuchterreger innerhalb der Walzenkörper anzuordnen und den Rest der Maschine schwingungsmässig abzukoppeln, um die schwingenden Massen und damit den Energiebedarf so gering wie möglich zu halten.

Dabei ergibt sich jedoch gerade bei relativ schmalen Bodenverdichtungsgeräten wie Grabenwalzen das Problem, dass die heute bekannten Unwuchterreger bei geeigneter Erregerleistung eine Baulänge aufweisen, welche es schwierig oder gar unmöglich macht, diese zusammen mit dem Walzenantrieb axial hintereinander im Rotationszentrum der Walzen anzuordnen, was wünschenswert ist, da so der Ausgangspunkt der Erregerkräfte im Wesentlichen mit dem Massenschwerpunkt der so gebildeten Walzenanordnung zusammenfällt, wodurch sich ein optimales Schwingverhalten der Walzen erzielen lässt und die übrige Struktur der Maschine nur geringen Zusatzbelastungen durch die Erregerkräfte ausgesetzt wird.

### DARSTELLUNG DER ERFINDUNG

Es stellt sich deshalb die Aufgabe, einen Unwuchterreger für Bodenverdichtungsgeräte zur Verfügung zu stellen, welcher eine gegenüber den bekannten Unwuchterregern deutlich geringere Baulänge aufweist.

Diese Aufgabe wird durch den Gegenstand von Patentanspruch 1 gelöst.

Demgemäss betrifft ein erster Aspekt der Erfindung einen Unwuchterreger für ein Bodenverdichtungsgerät. Der Unwuchterreger umfasst eine Tragstruktur, an welcher ein Unwuchtgewicht mit einer Lagerung rotierbar um eine im bestimmungsgemässen Betrieb gegenüber der Tragstruktur feststehende Rotationsachse gelagert ist, zur Erzeugung einer intermittierenden Erregerkraft, mit welcher die Tragstruktur im bestimmungsgemässen Betrieb in Schwingungen versetzt werden kann. Dabei ist die Lagerung des Unwuchtgewichts ganz oder teilweise innerhalb des Raumes angeordnet ist, welcher von dem Unwuchtgewicht bei dessen Rotation um die Rotationsachse umkreist wird, oder, mit anderen Worten gesagt, welcher von der Flugbahn des Unwuchtgewichtes umschlossen ist. Dadurch, dass dieser Raum zur Aufnahme zumindest eines Teils der Lagerung des Unwuchtgewichts bzw. des das Unwuchtgewicht tragenden rotierbaren Körpers genutzt wird, wird es möglich, Unwuchterreger mit sehr geringen axialen Baulängen zur Verfügung zu stellen.

Wird die Lagerung des Unwuchtgewichts bzw. des das Unwuchtgewicht tragenden rotierbaren Körpers vollständig innerhalb des Raumes angeordnet, welcher von dem Unwuchtgewicht bei dessen Rotation um die Rotationsachse umkreist wird, was bevorzugt ist, so wird kein zusätzlicher axialer Bauraum für diese Lagerung benötigt.

In einer bevorzugten Ausführungsform umfasst der Unwuchterreger Ankopplungsmittel zur Ankopplung des Unwuchtgewichts bzw. des das Unwuchtgewicht tragenden rotierbaren Körpers an einen Antriebsmotor zum Rotieren des Unwuchtgewichts um die Rotationsachse. Dabei weisen die Ankopplungsmittel ein Kopplungsorgan für die Ankopplung des Antriebsmotors auf, z.B. einen Kopplungsflansch oder eine Kopplungsverzahnung, welches Kopplungsorgan teilweise oder vollständig innerhalb des Raumes angeordnet ist, der von dem Unwuchtgewicht bei dessen Rotation um die Rotationsachse umkreist wird. Hierdurch ergibt sich der Vorteil, dass für die Ankopplung des Antriebsmotors kein zusätzlicher axialer Bauraum benötigt wird.

Umfasst der Unwuchterreger einen Antriebsmotor zum Rotieren des Unwuchtgewichts, was bevorzugt ist, weil er so als Baugruppe einsatzbereit ist und zum Betrieb lediglich noch an eine Energieversorgung für den Antriebsmotor angeschlossen werden muss, so ist es weiter bevorzugt, dass die Antriebwelle des Antriebsmotors teilweise oder vollständig innerhalb des Raumes angeordnet ist, der von dem Unwuchtgewicht bei dessen Rotation um die Rotationsachse umkreist wird. Auch hierdurch lässt sich zusätzlich axiale Baulänge einsparen.

Bevorzugterweise fallen die Rotationsachsen des Unwuchtgewichts und des Antriebsmotors zusammen, so dass sich der Vorteil ergibt, dass eine denkbar einfache Ankopplung des Antriebsmotors ohne zusätzliche relativ zueinander bewegte Bauteile möglich wird, was eine kostengünstige und robuste Konstruktion des Unwuchterregers begünstigt.

In einer weiteren bevorzugten Ausführungsform weist der Unwuchterreger ein erstes und ein zweites Unwuchtgewicht auf. Beide Unwuchtgewichte sind zur Erzeugung der intermittierenden Erregerkraft um eine gemeinsame Rotationsachse rotierbar und wahlweise derart relativ zueinander positionierbar, dass sich in einer ersten Relativposition die von beiden Unwuchtgewichten bei deren bestimmungsgemässer Rotation jeweils erzeugten Erregerkräfte zumindest teilweise addieren und sich diese in einer zweiten Relativposition zumindest teilweise subtrahieren. Hierdurch wird es möglich, wahlweise eine kleinere oder eine grössere resultierende Gesamt-Unwucht zur Erzeugung der intermittierenden Erregerkraft zur Verfügung zu stellen, zur Erzeugung unterschiedlich grosser Erregerkräfte.

Bevorzugterweise ist dabei das zweite Unwuchtgewicht mit einer Lagerung über einen bestimmten Drehwinkelbereich frei drehbar um die gemeinsame Rotationsachse der Unwuchtgewichte gelagert, so dass ein Wechsel zwischen der ersten und der zweiten Relativposition auf einfache Weise durch eine Drehrichtungsumkehr bewirkbar ist.

Bei derartigen Ausführungsformen des Unwuchterregers ist es von Vorteil, dass die Lagerung des zweiten Unwuchtgewichts teilweise oder vollständig innerhalb des Raumes angeordnet ist, welcher von dem ersten Unwuchtgewicht bei dessen Rotation um die Rotationsachse umkreist wird oder welcher von dem ersten Unwuchtgewicht bei dessen Rotation um die Rotationsachse beansprucht wird. Hierdurch wird für die Lagerung des zweiten Unwuchtgewichts kein oder relativ wenig zusätzlicher axialer Bauraum benötigt.

Auch ist es bei derartigen Ausführungsformen des Unwuchterregers von Vorteil, dass das zweite Unwuchtgewicht bei dessen Rotation um die Rotationsachse teilweise oder vollständig innerhalb des Raumes angeordnet ist, welcher von dem ersten Unwuchtgewicht bei dessen Rotation um die Rotationsachse umkreist wird oder welcher von dem ersten Unwuchtgewicht bei dessen Rotation um die Rotationsachse beansprucht wird. Hierdurch wird für die Flugbahn des zweiten Unwuchtgewichts kein oder relativ wenig zusätzlicher axialer Bauraum benötigt.

In weiteren bevorzugten Ausführungsformen ist der Unwuchterreger als Kreisschwinger oder als Richtschwinger ausgebildet. Im erstgenannten Fall sind besonders kostengünstige Konstruktionen möglich, da lediglich eine um eine Rotationsachse rotierende Unwuchtmasse erforderlich ist. Im letztgenannten Fall ergibt sich der Vorteil, dass die Wirkrichtung der Erregerkraft gezielt auf den Anwendungsfall abgestimmt werden kann.

Ein zweiter Aspekt der Erfindung betrifft eine Walzenanordnung für eine Vibrationswalze mit einem oder mehreren Unwuchterregern gemäss dem ersten Aspekt der Erfindung.

Die Walzenanordnung umfasst mindestens eine mit einer Walzenlagerung rotierbar gelagerte Walze und mindestens einen Antriebsmotor zum Rotieren dieser Walze im bestimmungsgemässen Betrieb der Walzenanordnung. Der Antriebsmotor zum Rotieren der Walze ist im Wesentlichen, d.h. mit einem Grossteil seiner körperlichen Erstreckung oder vollständig, innerhalb der Walze angeordnet.

Der Unwuchterreger weist einen Antriebsmotor auf, um die Walze beim bestimmungsgemässen Betrieb durch Rotieren seines oder seiner Unwuchtgewichte in Schwingungen zu versetzen. Der Antriebsmotor ist im Wesentlichen, d.h. mit einem Grossteil seiner körperlichen Erstreckung oder vollständig, innerhalb der Walze angeordnet.

Weiter weist die Walzenanordnung ein Anschlusselement auf, zur Ankopplung der Walzenanordnung an ein Chassis einer damit zu bildenden Vibrationswalze. Das Anschlusselement steht zur Ermöglichung der Ankopplung der Walzenanordnung an das Chassis radial über die äusseren Begrenzungen der mindestens einen Walze hervor und ist innerhalb der mindestens einen Walze mit der Walzenlagerung und mit der Tragstruktur des Unwuchterregers verbunden, derart, dass sich das Chassis einer mit der Walzenanordnung gebildeten Vibrationswalze im bestimmungsgemässen Betrieb über das Anschlusselement auf der in Schwingungen versetzten mindestens einen Walze abstützen kann.

Bei derartigen Walzenanordnungen kommen die Vorteile der Erfindung besonders deutlich zum Tragen.

In einer bevorzugten Ausführungsform der Walzenanordnung sind der mindestens eine Antriebsmotor der mindestens einen Walze und der mindestens eine Antriebsmotor des mindestens einen Unwuchterregers bzw. die Massenschwerpunkte dieser Antriebsmotoren im Wesentlichen im Zentrum der mindesten einen Walze angeordnet. Hierdurch ergibt sich der Vorteil, dass der Ausgangspunkt der Erregerkräfte im Wesentlichen mit dem Massenschwerpunkt der so gebildeten Walzenanordnung zusammenfällt, wodurch sich ein optimales Schwingverhalten der Walzen erzielen lässt und die übrige Struktur der Maschine nur geringen Zusatzbelastungen durch die Erregerkräfte ausgesetzt wird.

Bevorzugterweise fallen dabei die Rotationsachsen des Antriebsmotors der mindestens einen Walze und/oder des Antriebsmotors des mindestens einen Unwuchterregers mit der Rotationsachse der mindestens einen Walze zusammen. Hierdurch ergibt sich insbesondere bei bevorzugten Ausführungsformen der Walzenanordnung, bei welcher der mindestens eine Unwuchterreger als Kreisschwinger ausgebildet ist, der Vorteil, dass eine ausgeprägt kreisförmige Schwingbewegung der Walze erzielbar ist.

In einer weiteren bevorzugten Ausführungsform der Walzenanordnung sind zwischen dem Anschlusselement und der Tragstruktur des mindestens einen Unwuchterregers Schwingungsdämpfungsmittel angeordnet, bevorzugterweise Gummi-Schwingelemente, zur schwingungsmässigen Entkopplung des Anschlusselements von dem mindestens einen Unwuchterreger. Auf diese Weise kann das Anschlusselement direkt ohne weitere schwingungsdämpfende Massnahmen mit dem Chassis einer zu bildenden Vibrationswalze verbunden werden.

In noch einer weiteren bevorzugten Ausführungsform der Walzenanordnung ist die Walzenlagerung der mindestens einen Walze steif mit der Tragstruktur des mindestens einen Unwuchterregers verbunden, so dass die Walzenlagerung und mit ihr die mindestens eine Walze beim bestimmungsgemässen Betrieb von dem mindestens einen Unwuchterreger in Schwingungen versetzt wird. Hierdurch werden konstruktiv relativ einfache und damit kostengünstige Konstruktionen möglich.

In noch einer weiteren bevorzugten Ausführungsform der Walzenanordnung umfasst die mindestens eine Walze zwei Walzen, welche derart mit ihren Walzenlagerungen gelagert sind, dass sich ihre Rotationsachsen schneiden (z.B. bei kegelförmigen Walzen) oder zusammenfallen (z.B. bei zylindrischen Walzen identischen Durchmessers). Dabei ist es weiter bevorzugt, dass jede der beiden Walzen einen eigenen Antriebsmotor aufweist, mittels welchem sie unabhängig von der anderen Walze antreibbar ist. Hierdurch es möglich, eine mit der Walzenanordnung zu bildende Vibrationswalze durch unterschiedliches Antreiben der Walzen zu lenken.

Steht dabei das Anschlusselement zwischen den beiden Walzen radial über die äusseren Begrenzungen der Walzen hervor und bilden die dem Anschlusselement abgewandten Enden der beiden Walzen die axialen Begrenzungen der Walzenanordnung, was bevorzugt ist, so lassen sich mit der Walzenanordnung Grabenwalzen bilden, welche aufgrund der Notwendigkeit einer geringen Breite derselben besonders von den Vorteilen der Erfindung profitieren.

Auch ist es bei Ausführungsformen der Walzenanordnung mit zwei Walzen bevorzugt, dass die Walzenanordnung genau einen Unwuchterreger aufweist, mittels welchem beide Walzen gemeinsam in Schwingungen versetzbar sind. Hierdurch können kostengünstig besonders kompakte erfindungsgemässe Walzenanordnungen zur Verfügung gestellt werden.

Ein dritter Aspekt der Erfindung betrifft eine Vibrationswalze, bevorzugterweise zur Bodenverdichtung, mit einer Walzenanordnung gemäss dem zweiten Aspekt der Erfindung. Bei derartigen Vibrationswalzen, insbesondere in Form von zweiachsigen Grabenwalzen, treten die Vorteile der Erfindung besonders deutlich zu Tage.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine perspektivische Draufsicht auf eine erfindungsgemässe Walzenanordnung;
Fig. 2 eine Seitenansicht der Walzenanordnung aus Fig. 1;
Fig. 3 einen Schnitt durch die Walzenanordnung aus Fig. 1 entlang der Linie A-A in Fig. 2; und
Fig. 4 einen Schnitt durch die Walzenanordnung aus Fig. 1 entlang der Linie B-B in Fig. 3.

### WEGE ZUR AUSFÜHRUNG DER ERFINDUNG

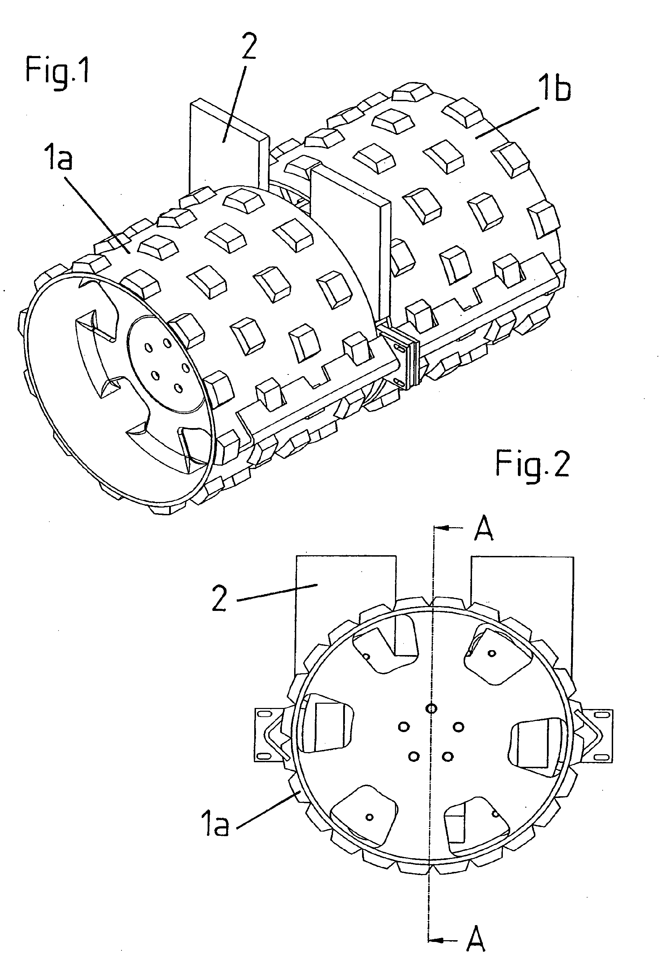

Fig. 1 zeigt eine erfindungsgemässe Walzenanordnung für eine vibrationserregte Grabenwalze in einer perspektivischen Draufsicht. Die Walzenanordnung umfasst zwei mit zusammenfallenden Drehachsen X nebeneinander angeordnete genoppte Walzen 1a, 1b identischen Durchmessers und ein Anschlusselement 2 zur Ankopplung der Walzenanordnung an das Chassis der damit zu bildenden Grabenwalze.

Das Anschlusselement 2 steht zwischen den beiden Walzen 1a, 1b radial über die äusseren Begrenzungen der Walzen 1a, 1b hervor und ist innerhalb der Walzen 1a, 1b derart mit diesen verbunden, dass die Walzen 1a, 1b um ihre Drehachsen X herum relativ zum Anschlusselement 2 rotiert werden können und sich das Chassis der mit der Walzenanordnung zu bildenden Grabenwalze dabei über das Anschlusselement 2 auf den Walzen 1a, 1b abstützen kann. Die dem Anschlusselement 2 abgewandten Enden der Walzen 1a, 1b bilden die axialen Begrenzungen der Walzenanordnung.

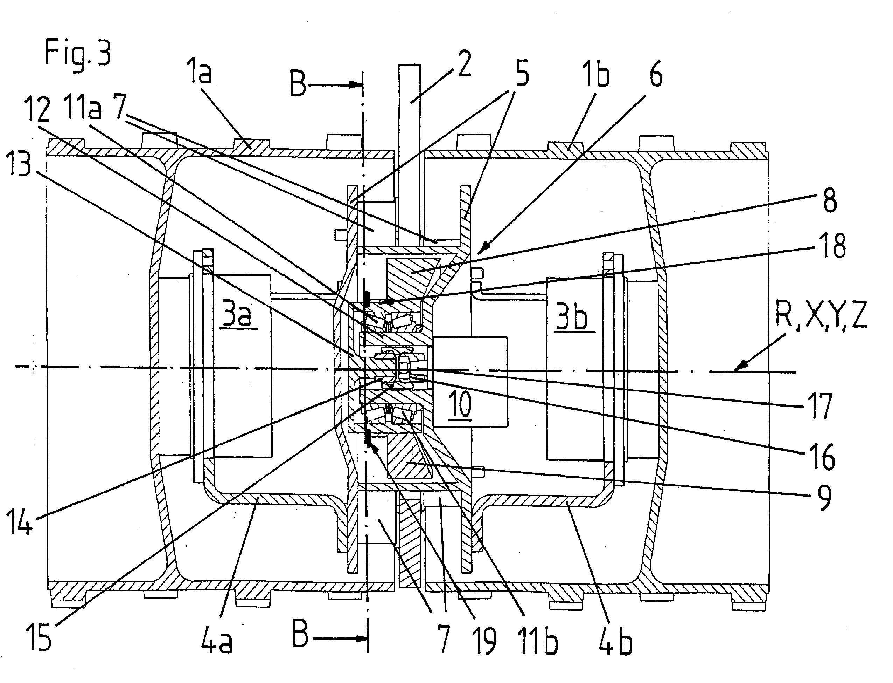

Wie in Zusammenschau mit Fig. 2, welche eine Seitenansicht des Walzenanordnung zeigt, und mit Fig. 3, welche einen vertikalen Längsschnitt durch die Walzenanordnung zeigt, zu erkennen ist, weist jede der Walzen 1a, 1b einen eigenen Hydraulikmotor 3a, 3b zu deren Antrieb auf, welcher im Zentrum der von ihm angetriebenen Walze 1a, 1b angeordnet ist und zudem auch die Lagerung dieser Walze 1a, 1b bildet.

Die Motoren 3a, 3b zum Antrieb der Walzen 1a, 1b sind jeweils über einen nach oben offenen Stützdom 4a, 4b vibrationssteif mit dem Gehäuse 5 eines erfindungsgemässen Unwuchterregers 6 verbunden, welcher innerhalb der beiden Walzen 1a, 1b und des Anschlusselements 2 angeordnet ist, so dass sie zusammen mit den von ihnen getragenen Walzen 1a, 1b gemeinsam durch diesen Unwuchterreger 6 in Schwingungen versetzt werden können.

Das Gehäuse 5 des Unwuchterregers 6 ist über Gummi-Schwingelemente 7 an dem Anschlusselement 2 befestigt, wodurch sich das Anschlusselement 2 zwar über den Unwuchterreger 6 auf den Walzen 1a, 1b abstützen kann, aber schwingungsmässig von diesem und den mit diesem zu Schwingungen anregbaren Walzen 1a, 1b entkoppelt ist.

Der Unwuchterreger 6 ist als Kreisschwinger ausgebildet und weist ein erstes Unwuchtgewicht 8 und ein zweites Unwuchtgewicht 9 auf, welche rotierbar um eine gemeinsame Rotationsachse Y am Gehäuse 5 (anspruchsgemässe Tragstruktur des erfindungsgemässen Unwuchterregers) gelagert und mittels eines zugeordneten hydraulischen Antriebsmotors 10 rotierbar sind, zur Erzeugung einer intermittierenden Erregerkraft mit welcher im bestimmungsgemässen Betrieb das Gehäuse 5 und die daran über die Stützdome 4a, 4b und die Motoren 3a, 3b gelagerten Walzen 1a, 1b in Schwingungen versetzt werden. Die gemeinsame Rotationsachse Y der Unwuchtgewichte 8, 9 und die Rotationsachse Z des Antriebsmotors 10 fallen mit den Rotationsachsen R der Hydraulikmotoren 3a, 3b und den Drehachsen X der Walzen 1a, 1b zusammen.

Das erste Unwuchtgewicht 8 ist mit zwei Wälzlagern 11a, 11b auf einem fest mit den Gehäuse 5 verbundenen rohrstumpfartigen Fortsatz 12 im Zentrum des Gehäuses 5 gelagert. Dabei befindet sich das rechte Wälzlager 11b innerhalb des Raumes, welcher im bestimmungsgemässen Betrieb von den Unwuchtgewichten 8, 9 bei deren Rotation umkreist wird.

Das das erste Unwuchtgewicht 8 bildende Bauteil ist über ein axial in den rohrstumpfartigen Fortsatz 12 eindringendes Kupplungselement 13 mit Ritzel 14, eine innenverzahnte Kupplungshülse 15 und ein weiteres Ritzel 16 (anspruchsgemässe Ankopplungsmittel) innerhalb des rohrstumpfartigen Fortsatzes 12 axialspieltolerant aber rotatorisch formschlüssig an die Welle 17 des Antriebsmotors 10 angekoppelt. Dabei befindet sich die Kupplungshülse 15, das weitere Ritzel 16 und ein Teil der Welle 17 des Antriebsmotors 10 innerhalb des Raumes, welcher von dem ersten Unwuchtgewicht 8 bei dessen Rotation im bestimmungsgemässen Betrieb umkreist wird.

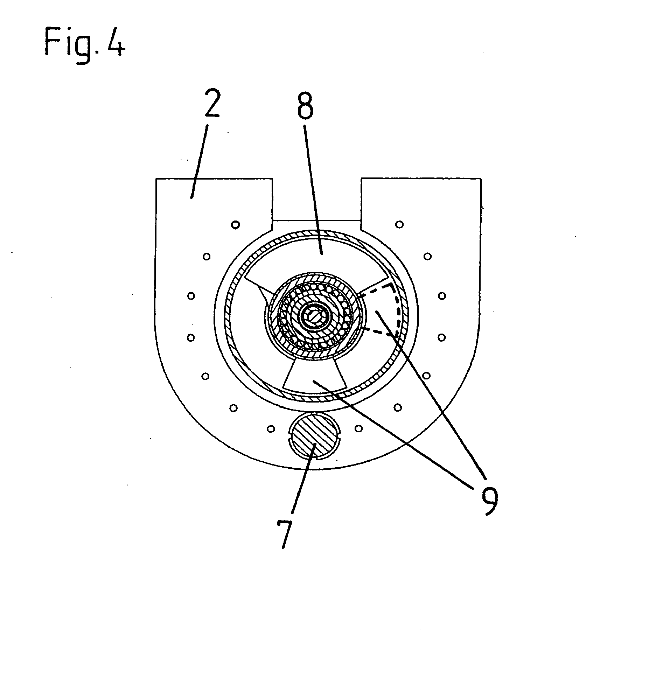

Wie am besten in Zusammenschau mit Fig. 4 erkennbar ist, welche einen Schnitt durch die Walzenanordnung aus Fig. 1 entlang der Linie B-B in Fig. 3 zeigt (die Walzen 1a, 1b und die oberen Gummi-Schwingelemente 7 sind nicht dargestellt), ist das zweite Unwuchtgewicht 9 mittels eines Gleitlagers 18 frei verdrehbar gegenüber dem ersten Unwuchtgewicht 8 zwischen zwei Anschlägen (nicht gezeigt) auf dem das erste Unwuchtgewicht 8 bildenden Bauteil gelagert und befindet sich bei seiner Rotation um die gemeinsame Rotationsachse Y vollständig innerhalb des Raumes, welcher von dem ersten Unwuchtgewicht 8 bei dessen Rotation beansprucht wird. Dabei befindet sich ein Teil seiner Gleitlagerung 18 innerhalb des Raumes, welcher von den Unwuchtgewichten 8, 9 bei deren Rotation um die Rotationsachse Y umkreist wird. Axial wird das zweite Unwuchtgewicht 9 zwischen dem ersten Unwuchtgewicht 8 und einem Sicherungsring 19 positioniert.

Durch die freie Verdrehbarkeit des zweiten Unwuchtgewichts 9 gegenüber dem ersten Unwuchtgewicht 8 zwischen den Anschlägen ist es möglich, durch Drehrichtungsumkehr des Antriebsmotors 10 die Unwuchtgewichte 8, 9 wahlweise derart relativ zueinander zu positionieren, dass sich in einer ersten Relativposition (siehe die in Fig. 4 gestrichelt eingezeichnete Position des zweiten Unwuchtgewichts 9) die von beiden Unwuchtgewichten 8, 9 bei deren bestimmungsgemässer Rotation jeweils erzeugten Erregerkräfte zumindest teilweise addieren und sich diese in einer zweiten Relativposition (siehe die in Fig. 4 in durchgezogenen Linien eingezeichnete Position des zweiten Unwuchtgewichts 9) zumindest teilweise subtrahieren. Hierdurch wird es möglich, mit dem Unwuchterreger je nach Drehrichtung des Motors 10 unterschiedlich grosse Erregerkräfte zur Verfügung zu stellen.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Unwuchterreger (6) für ein Bodenverdichtungsgerät, umfassend
a) eine Tragstruktur (5), und
b) ein Unwuchtgewicht (8, 9), welches mit einer Lagerung (11a, 11b) rotierbar um eine im bestimmungsgemässen Betrieb gegenüber der Tragstruktur (5) feststehende Rotationsachse (Y) an der Tragstruktur (5) gelagert ist zur Erzeugung einer intermittierenden Erregerkraft um die Tragstruktur (5) im bestimmungsgemässen Betrieb in Schwingungen zu versetzen, **dadurch gekennzeichnet, dass** die Lagerung (11a, 11b) des Unwuchtgewichts (8, 9) zumindest teilweise innerhalb des Raumes angeordnet ist, welcher von dem Unwuchtgewicht (8, 9) bei dessen Rotation um die Rotationsachse (Y) umkreist wird.

2. Unwuchterreger (6) nach Anspruch 1, wobei die Lagerung (11a, 11b) vollständig innerhalb des Raumes angeordnet ist, welcher von dem Unwuchtgewicht (8, 9) bei dessen Rotation um die Rotationsachse (Y) umkreist wird.

3. Unwuchterreger (6) nach einem der vorangehenden Ansprüche, des weiteren umfassend Ankopplungsmittel (13, 14, 15, 16) zur Ankopplung des Unwuchtgewichts (8, 9) an einen Antriebsmotor (10) zum Rotieren des Unwuchtgewichts (8, 9) um die Rotationsachse (Y), wobei die Ankopplungsmittel (13, 14, 15, 16) ein Kopplungsorgan (15, 16) für die Ankopplung des Antriebsmotors (10) aufweisen, insbesondere einen Kopplungsflansch oder eine Kopplungsverzahnung, welches teilweise oder vollständig innerhalb des Raumes angeordnet ist, der von dem Unwuchtgewicht (8, 9) bei dessen Rotation um die Rotationsachse (Y) umkreist wird.

4. Unwuchterreger (6) nach einem der vorangehenden Ansprüche, des weiteren umfassend einen Antriebsmotor (10) zum Rotieren des Unwuchtgewichts (8, 9).

5. Unwuchterreger (6) nach Anspruch 3 und nach Anspruch 4, wobei der Antriebsmotor (10) über das Kopplungsorgan (15, 16) an die Ankopplungsmittel (13, 14, 15, 16) angekoppelt ist und wobei die Welle (17) des Antriebsmotors (10) teilweise oder vollständig innerhalb des Raumes angeordnet ist, der von dem Unwuchtgewicht (8, 9) bei dessen Rotation um die Rotationsachse (Y) umkreist wird.

6. Unwuchterreger (6) nach einem der Ansprüche 4 bis 5, wobei die Rotationsachse (Y) des Unwuchtgewichts (8, 9) und die Rotationsachse (Z) des Antriebsmotors (10) zusammenfallen.

7. Unwuchterreger (6) nach einem der vorangehenden Ansprüche, wobei der Erreger ein erstes Unwuchtgewicht (8) und ein zweites Unwuchtgewicht (9) aufweist, welche Unwuchtgewichte (8, 9) zur Erzeugung der intermittierenden Erregerkraft um eine gemeinsame Rotationsachse (Y) rotierbar sind und wahlweise derart relativ zueinander positionierbar sind, dass sich in einer ersten Relativposition die von beiden Unwuchtgewichten (8, 9) bei deren bestimmungsgemässer Rotation jeweils erzeugten Erregerkräfte zumindest teilweise addieren und sich diese in einer zweiten Relativposition zumindest teilweise subtrahieren.

8. Unwuchterreger (6) nach Anspruch 7, wobei das zweite Unwuchtgewicht (9) mit einer Lagerung (18) über einen bestimmten Drehwinkelbereich frei drehbar um die gemeinsame Rotationsachse (Y) der Unwuchtgewichte (8, 9) gelagert ist, so dass ein Wechsel zwischen der ersten und der zweiten Relativposition durch eine Umkehr der Rotationsrichtung der Unwuchtgewichte (8, 9) bewirkbar ist.

9. Unwuchterreger (6) nach Anspruch 8, wobei die Lagerung (18) des zweiten Unwuchtgewichts (9) teilweise oder vollständig innerhalb des Raumes angeordnet ist, welcher von dem ersten Unwuchtgewicht (8) bei dessen Rotation um die Rotationsachse (Y) umkreist wird oder welcher von dem ersten Unwuchtgewicht (8) bei dessen Rotation um die Rotationsachse (Y) beansprucht wird.

10. Unwuchterreger (6) nach einem der Ansprüche 7 bis 9, wobei das zweite Unwuchtgewicht (9) bei dessen Rotation um die Rotationsachse (Y) teilweise oder vollständig innerhalb des Raumes angeordnet ist, welcher von dem ersten Unwuchtgewicht (8) bei dessen Rotation um die Rotationsachse (Y) beansprucht wird.

11. Unwuchterreger (6) nach einem der vorangehenden Ansprüche, wobei der Unwuchterreger als Kreisschwinger oder als Richtschwinger ausgebildet ist.

12. Walzenanordnung für eine Vibrationswalze, umfassend:
a) mindestens eine mit einer Walzenlagerung rotierbar gelagerte Walze (1a, 1b),
b) mindestens einen Antriebsmotor (3a, 3b) zum Rotieren der mindestens einen Walze (1a, 1b) im bestimmungsgemässen Betrieb der Walzenanordnung, wobei der mindestens eine Antriebsmotor (3a, 3b) im Wesentlichen innerhalb der mindestens einen Walze (1a, 1b) angeordnet ist,
c) mindestens einen Unwuchterreger (6) nach einem der vorangehenden Ansprüche mit einem Antriebsmotor (10) zum Rotieren des oder der Unwuchtgewichte (8, 9) des Unwuchterregers (6), um die mindestens eine Walze (1a, 1b) beim bestimmungsgemässen Betrieb in Schwingungen zu versetzen, wobei der mindestens eine Unwuchterreger (6) und dessen Antriebsmotor (10) im Wesentlichen innerhalb der mindestens einen Walze (1a, 1b) angeordnet sind, und
d) ein Anschlusselement (2) zur Ankopplung der Walzenanordnung an ein Chassis einer damit zu bildenden Vibrationswalze, wobei das Anschlusselement (2) zur Ermöglichung der Ankopplung der Walzenanordnung an das Chassis radial über die äusseren Begrenzungen der mindestens einen Walze (1a, 1b) hervorsteht und innerhalb der mindestens einen Walze (1a, 1b) mit der Walzenlagerung und mit der Tragstruktur (5) des Unwuchterregers (6) verbunden ist, derart, dass sich das Chassis einer mit der Walzenanordnung gebildeten Vibrationswalze im bestimmungsgemässen Betrieb über das Anschlusselement (2) auf der in Schwingungen versetzten mindestens einen Walze (1a, 1b) abstützen kann.

13. Walzenanordnung nach Anspruch 12, wobei der mindestens eine Antriebsmotor (3a, 3b) der mindestens einen Walze (1a, 1b) und der Antriebsmotor (10) des mindestens einen Unwuchterregers (6) im Wesentlichen im Zentrum der mindesten einen Walze (1a, 1b) angeordnet sind, und insbesondere, dass die Rotationsachsen (R) des mindestens einen Antriebsmotors (3a, 3b) der mindestens einen Walze (1a, 1b) und/oder die Rotationsachse (Z) des Antriebsmotors (10) des mindestens einen Unwuchterregers (6) mit der Rotationsachse (X) der mindestens einen Walze (1a, 1b) zusammenfallen.

14. Walzenanordnung nach einem der Ansprüche 12 bis 13, wobei der mindestens eine Unwuchterreger (6) als Kreisschwinger ausgebildet ist und die Rotationsachsen (Y, X) des Unwuchtgewichts oder der Unwuchtgewichte (8, 9) des mindestens einen Unwuchterregers (6) und der mindestens einen Walze (1a, 1b) zusammenfallen.

15. Walzenanordnung nach einem der Ansprüche 12 bis 14, wobei zwischen dem Anschlusselement (2) und der Tragstruktur (5) des mindestens einen Unwuchterregers (6) Schwingungsdämpfungsmittel (7) angeordnet sind, insbesondere Gummi-Schwingelemente (7), zur schwingungsmässigen Entkopplung des Anschlusselements (2) von dem mindestens einen Unwuchterreger (6).

16. Walzenanordnung nach einem der Ansprüche 12 bis 15, wobei die Walzenlagerung der mindestens einen Walze steif mit der Tragstruktur (5) des mindestens einen Unwuchterregers (6) verbunden ist, so dass die Walzenlagerung und mit ihr die mindestens eine Walze (1a, 1b) beim bestimmungsgemässen Betrieb von dem mindestens einen Unwuchterreger (6) in Schwingungen versetzt wird.

17. Walzenanordnung nach einem der Ansprüche 12 bis 16, wobei die mindestens eine Walze (1a, 1b) zwei Walzen (1a, 1b) umfasst, welche derart mit ihren Walzenlagerungen gelagert sind, dass sich ihre Rotationsachsen (X) schneiden oder zusammenfallen, und insbesondere, wobei jede der beiden Walzen (1a, 1b) einen eigenen Antriebsmotor (3a, 3b) aufweist, mittels welchem sie unabhängig von der anderen Walze (1b, 1a) antreibbar ist.

18. Walzenanordnung nach Anspruch 17, wobei die Walzenanordnung genau einen Unwuchterreger (6) aufweist, mittels welchem beide Walzen (1a, 1b) gemeinsam in Schwingungen versetzbar sind.

19. Walzenanordnung nach einem der Ansprüche 17 bis 18, wobei das Anschlusselement (2) zwischen den beiden Walzen (1a, 1b) radial über die äusseren Begrenzungen der Walzen (1a, 1b) hervorsteht und die dem Anschlusselement (2) abgewandten Enden der beiden Walzen (1a, 1b) die axialen Begrenzungen der Walzenanordnung bilden.

20. Vibrationswalze, insbesondere zur Bodenverdichtung, mit einer Walzenanordnung nach einem der Ansprüche 12 bis 19.

## Claims

1. Unbalance type exciter (6) for a soil compaction device, comprising
a) a carrying structure (5), and
b) an unbalance weight (8, 9), which by means of a bearing (11a, 11b) is supported at the carrying structure (5) in rotatable manner around a rotation axis (Y), which rotation axis in the intended use is stationary with respect to the carrying structure (5), for generating an intermittent exciting force for causing the carrying structure (5) in the intended use to vibrate, **characterized in that** the bearing (11a, 11b) of the unbalance weight (8, 9) is arranged at least partially within the space which is circled by the unbalance weight (8, 9) when rotating around the rotation axis (Y).

2. Unbalance type exciter (6) according to claim 1, wherein the bearing (11a, 11b) is completely arranged within the space which is circled by the unbalance weight (8, 9) when rotating around the rotation axis (Y).

3. Unbalance type exciter (6) according to one of the preceding claims, further comprising coupling means (13, 14, 15, 16) for coupling the unbalance weight (8, 9) to a drive motor (10) for rotating the unbalance weight (8, 9) around the rotation axis (Y), wherein the coupling means (13, 14, 15, 16) comprise a coupling member (15, 16) for coupling to the drive motor (10), in particular a coupling flange or a coupling toothwork, which partially or completely is arranged within the space which is circled by the unbalance weight (8, 9) when rotating around the rotation axis (Y).

4. Unbalance type exciter (6) according to one of the preceding claims, further comprising a drive motor (10) for rotating the unbalance weight (8, 9).

5. Unbalance type exciter (6) according to claim 3 and according to claim 4, wherein the drive motor (10) via the coupling member (15, 16) is coupled to the coupling means (13, 14, 15, 16) and wherein the drive shaft (17) of the drive motor (10) is partially or completely arranged within the space which is circled by the unbalance weight (8, 9) when rotating around the rotation axis (Y).

6. Unbalance type exciter (6) according to one of the claims 4 to 5, wherein the rotation axis (Y) of the unbalance weight (8, 9) and the rotation axis (Z) of the drive motor (10) coincide with each other.

7. Unbalance type exciter (6) according to one of the preceding claims, wherein the exciter comprises a first unbalance weight (8) and a second unbalance weight (9), which unbalance weights (8, 9) for generating the intermittent exciting force are rotatable around a common rotation axis (Y) and optionally can be positioned relative to each other in such a manner that in a first relative position the exciting forces generated by the two unbalance weights (8, 9) when rotating them in the intended manner at least partially add up and in a second relative position at least partially subtract from each other.

8. Unbalance type exciter (6) according to claim 7, wherein the second unbalance weight (9) by means of a bearing (18) is mounted freely rotatable over a certain range of angle of rotation around the common rotation axis (Y) of the unbalance weights (8, 9), so that a change between the first and the second relative position can be effected by reversing the direction of rotation of the unbalance weights (8, 9).

9. Unbalance type exciter (6) according to claim 8, wherein the bearing (18) of the second unbalance weight (9) partially or completely is arranged within the space which is circled by the first unbalance weight (8) when rotating around the rotation axis (Y) or which is utilized by the first unbalance weight (8) when rotating around the rotation axis (Y).

10. Unbalance type exciter (6) according to one of the claims 7 to 9, wherein the second unbalance weight (9) when rotating around the rotation axis (y) is partially or completely arranged within the space which is utilized by the first unbalance weight (8) when rotating around the rotation axis (Y).

11. Unbalance type exciter (6) according to one of the preceding claims, wherein the unbalance type exciter is designed as circular oscillator or as directional oscillator.

12. Roller arrangement for a vibratory roller, comprising:
a) at least one roller (1a, 1b) which by means of a bearing is supported in a rotatable manner,
b) at least one drive motor (3a, 3b) for rotating the at least one roller (1a, 1b) in the intended use of the roller arrangement, wherein the at least one drive motor (3a, 3b) is arranged substantially within the at least one roller (1a, 1b),
c) at least one unbalance type exciter (6) according to one of the preceding claims having a drive motor (10) for rotating the unbalance weight or unbalance weights (8, 9) of the unbalance type exciter (6) for causing the roller (1a, 1b) in the intended use to vibrate, wherein the at least one unbalance type vibrator (6) and its drive motor (10) are substantially arranged within the at least one roller (1a, 1b), and
d) a connecting element (2) for connecting the roller arrangement to a chassis of a vibratory roller to be formed therewith, wherein the connecting element (2) for making possible the connecting of the roller arrangement to the chassis radially protrudes over the outer boundaries of the at least one roller (1a, 1b) and within the at least one roller (1a, 1b) is connected with the bearing of the roller and with the carrying structure (5) of the unbalance type exciter (6) in such a manner that the chassis of a vibratory roller formed with the roller arrangement in the intended use can be supported via the connecting element (2) on the at least one roller (1a, 1b) which is caused to vibrate.

13. Roller arrangement according to claim 12, wherein the at least one drive motor (3a, 3b) of the at least one roller (1a, 1b) and the drive motor (10) of the at least one unbalance type exciter (6) are arranged substantially in the centre of the at least one roller (1a, 1b), and in particular that the rotation axis (R) of the at least one drive motor (3a, 3b) of the at least one roller (1a, 1b) and/or the rotation axis (Z) of the drive motor (10) of the at least one unbalance type exciter (6) coincide with the rotation axis (X) of the at least one roller (1a, 1b).

14. Roller arrangement according to one of the claims 12 to 13, wherein the at least one unbalance type exciter (6) is designed as circular oscillator and the rotation axis (Y, X) of the unbalance weight or unbalance weights (8, 9) of the at least one unbalance type exciter (6) and of the at least one roller (1a, 1b) coincide.

15. Roller arrangement according to one of the claims 12 to 14, wherein between the connecting element (2) and the carrying structure (5) of the at least one unbalance type exciter (6) vibration damping means (7) are arranged, in particular rubber mounting elements (7), for decoupling the connecting element (2) from the at least one unbalance type exciter (6) with respect to vibrations.

16. Roller arrangement according to one of the claims 12 to 15, wherein the bearing of the at least one roller in a rigid manner is connected to the carrying structure (5) of the at least one unbalance type exciter (6), so that the bearing of the roller and with it the roller (1a, 1b) in the intended use are caused to vibrate by the unbalance type exciter (6).

17. Roller arrangement according to one of the claims 12 to 16, wherein the at least one roller (1a, 1b) comprises two rollers (1a, 1b), which by its bearings are supported in such a manner that their rotation axis (X) intersect or coincide, and in particular, wherein each of the two rollers comprises its own drive motor (3a, 3b), by means of which it can be driven independently of the other roller (1a, 1b).

18. Roller arrangement according to claim 17, wherein the roller arrangement comprises exactly one unbalance type exciter (6) by means of which both rollers (1a, 1b) can commonly be caused to vibrate.

19. Roller arrangement according to one of the claims 17 to 18, wherein the connecting element (2) between the two rollers (1a, 1b) radially protrudes over the outer boundaries of the rollers (1a, 1b) and the ends of the two rollers (1a, 1b) which are facing away from the connecting element (2) form the axial boundaries of the roller arrangement.

20. Vibratory roller, in particular for soil compaction, comprising a roller arrangement according to one of the claims 12 to 19.

## Revendications

1. Excitateur à balourd (6) pour un dispositif de compactage du sol, comprenant
a) une structure portante (5), et
b) une masselotte (8, 9), étant supportée à la structure portante (5) avec un palier (11a, 11b) de manière rotative autour d'un axe de rotation (Y) fixe par rapport à la structure portante (5), quand utilisée comme prévu, pour générer une force excitante intermittente afin de causer une vibration de la structure portante (5), quand utilisée comme prévu, **caractérisé en ce que**
le palier (11a, 11b) de la masselotte (8, 9) est arrangé an moins partiellement à l'intérieur de l'espace autour duquel la masselotte (8, 9) tourne pendant sa rotation autour de l'axe de rotation (Y).

2. Excitateur à balourd (6) selon la revendication 1, le palier (11a, 11b) étant arrangé entièrement à l'intérieur de l'espace autour duquel la masselotte (8, 9) tourne pendant sa rotation autour de l'axe de rotation (Y).

3. Excitateur à balourd (6) selon l'une des revendications précédentes, en outre comprenant des moyens de couplage (13, 14, 15, 16) pour coupler la masselotte (8, 9) à un moteur d'entrainement (10) afin de tourner la masselotte (8, 9) autour de l'axe de rotation (Y), les moyens de couplage (13, 14, 15, 16) ayant un membre de couplage (15, 16) pour le couplage du moteur d'entrainement (10), particulièrement une bride de couplage ou une denture de couplage, étant arrangé partiellement ou entièrement à l'intérieur de l'espace autour duquel la masselotte (8, 9) tourne pendant sa rotation autour de l'axe de rotation (Y).

4. Excitateur à balourd (6) selon l'une des revendications précédentes, en outre comprenant un moteur d'entraînement (10) pour tourner la masselotte (8, 9).

5. Excitateur à balourd (6) selon la revendication 3 et 4, le moteur d'entraînement (10) étant couplé aux moyens de couplage (13, 14, 15, 16) par le membre de couplage (15, 16) et l'arbre (17) du moteur d'entraînement (10) étant arrangé partiellement ou entièrement à l'intérieur de l'espace autour duquel la masselotte (8, 9) tourne pendant sa rotation autour de l'axe de rotation (Y).

6. Excitateur à balourd (6) selon l'une des revendications 4 à 5, l'axe de rotation (Y) de la masselotte (8, 9) et l'axe de rotation (Z) du moteur d'entraînement (10) étant identiques.

7. Excitateur à balourd (6) selon l'une des revendications précédentes, l'excitateur ayant une première masselotte (8) et une deuxième masselotte (9), les masselottes (8, 9) étant rotatives autour d'un axe de rotation commun (Y) afin de générer la force excitante intermittente et pouvant être positionnées l'une par rapport à l'autre de sorte que dans une première position relative les forces excitantes générées par les deux masselottes (8, 9) pendant leur rotation comme prévu s'additionnent au moins partiellement et se soustraient au moins partiellement dans une deuxième position relative.

8. Excitateur à balourd (6) selon la revendication 7, la deuxième masselotte (9) étant supportée avec un palier (18) de manière à pouvoir tourner librement autour de l'axe de rotation commun (Y) des masselottes (8, 9) dans une certaine gamme d'angles de rotation, de sorte qu'un changement entre la première et la deuxième position relative est causée par une inversion de la direction de rotation des masselottes (8, 9).

9. Excitateur à balourd (6) selon la revendication 8, le palier (18) de la deuxième masselotte (9) étant arrangé partiellement ou entièrement à l'intérieur de l'espace autour duquel la première masselotte (8) tourne pendant sa rotation autour de l'axe de rotation (Y) ou qui est revendiqué par la première masselotte (8) pendant sa rotation autour de l'axe de rotation (Y).

10. Excitateur à balourd (6) selon l'une des revendications 7 à 9, la deuxième masselotte (9) étant arrangée partiellement ou entièrement à l'intérieur de l'espace revendiqué par la première masselotte (8) pendant sa rotation autour de l'axe de rotation (Y).

11. Excitateur à balourd (6) selon l'une des revendications précédentes, l'excitateur à balourd étant un vibrateur circulaire ou un vibrateur à action dirigée.

12. Arrangement de rouleaux pour un rouleau vibrant, comprenant:
a) au moins un rouleau (1a, 1b) supporté de manière rotative avec un support de rouleau,
b) au moins un moteur d'entrainement (3a, 3b) pour tourner l'au moins un rouleau (1a, 1b) dans l'opération prévue de l'arrangement de rouleaux, l'au moins un moteur d'entrainement (3a, 3b) étant arrangé essentiellement à l'intérieur de l'au moins un rouleau (1a, 1b),
c) au moins un excitateur à balourd (6) selon l'une des revendications précédentes avec un moteur d'entrainement (10) pour tourner la masselotte ou les masselottes (8, 9) de l'excitateur à balourd (6), afin de faire vibrer l'au moins un rouleau (1a, 1b) dans l'opération comme prévu, l'au moins un excitateur à balourd (6) et son moteur d'entrainement (10) étant arrangés essentiellement à l'intérieur de l'au moins un rouleau (1a, 1b), et
d) un élément de couplage (2) pour coupler l'arrangement de rouleaux à un châssis d'un rouleau vibrant à former avec, l'élément de couplage (2) faisant saille radialement au-dessus des limites extérieures de l'au moins un rouleau (1a, 1b), afin de permettre le couplage de l'arrangement de rouleaux au châssis, et étant couplé avec le support de rouleau et avec la structure portante (5) de l'excitateur à balourd (6) à l'intérieur de l'au moins un rouleau (1a, 1b), de sorte que le châssis d'un rouleau vibrant formé avec l'arrangement de rouleaux peut s'appuyer sur l'au moins un rouleau (1a, 1b) qui vibre, par l'intermédiaire de l'élément de couplage (2), pendant l'opération comme prévu.

13. Arrangement de rouleaux selon la revendication 12, l'au moins un moteur d'entrainement (3a, 3b) de l'au moins un rouleau (1a, 1b) et le moteur d'entrainement (10) de l'au moins un excitateur à balourd (6) étant arrangés essentiellement au centre de l'au moins un rouleau (1a, 1b), et particulièrement les axes de rotation (R) de l'au moins un moteur d'entrainement (3a, 3b) de l'au moins un rouleau (1a, 1b) et/ou l'axe de rotation (Z) du moteur d'entrainement (10) de l'au moins un excitateur à balourd (6) étant identique à l'axe de rotation (X) de l'au moins un rouleau (1a, 1b).

14. Arrangement de rouleaux selon l'une des revendications 12 à 13, l'au moins un excitateur à balourd (6) étant un vibrateur circulaire et les axes de rotation (Y, X) de la masselotte ou des masselottes (8, 9) de l'au moins un excitateur à balourd (6) et de l'au moins un rouleau (1a, 1b) étant identiques.

15. Arrangement de rouleaux selon l'une des revendications 12 à 14, des moyens d'atténuation d'oscillations (7) étant arrangés entre l'élément de couplage (2) et la structure portante (5) de l'au moins un excitateur à balourd (6), particulièrement des éléments d'oscillation de gomme (7), afin de découpler l'élément de couplage (2) de l'excitateur à balourd (6) en termes d'oscillations.

16. Arrangement de rouleaux selon l'une des revendications 12 à 15, le support de rouleau de l'au moins un rouleau étant couplé de manière rigide avec la structure portante (5) de l'au moins un excitateur à balourd (6), de sorte que le support de rouleau, et avec lui l'au moins un rouleau (1a, 1b), est mis en vibration par l'au moins un excitateur à balourd (6), quand opéré comme prévu.

17. Arrangement de rouleaux selon l'une des revendications 12 à 16, l'au moins un rouleau (1a, 1b) comprenant deux rouleaux (1a, 1b) qui sont supportés de telle manière avec leur supports de rouleau, que leur axes de rotation (X) se croisent ou sont identiques, et particulièrement chacune des deux rouleaux (1a, 1b) ayant un propre moteur d'entrainement (3a, 3b), à l'aide duquel il peut être entraîné indépendamment de l'autre rouleau (1b, la).

18. Arrangement de rouleaux selon la revendication 17, l'arrangement de rouleaux ayant précisément un excitateur à balourd (6) à l'aide duquel les deux rouleaux (1a, 1b) peuvent être mis en vibration ensemble.

19. Arrangement de rouleaux selon l'une des revendications 17 à 18, l'élément de couplage (2) faisant saille radialement au-dessus des limites extérieures des rouleaux (1a, 1b) entre les deux rouleaux (1a, 1b) et les extrémités des deux rouleaux (1a, 1b), qui sont opposées à l'élément de couplage (2), formant les limites axiales de l'arrangement de rouleaux.

20. Rouleau vibrant, particulièrement pour le compactage du sol, avec un arrangement de rouleaux selon l'une des revendications 12 à 19.
